# EUROPEAN PATENT APPLICATION

(11) **EP 4 286 186 A1**
(43) Date of publication of application: **06.12.2023**
(21) Application number: 21921750.2
(22) Date of filing: 27.01.2021
(51) Int. Cl.: B60J 10/76

(54) **VEHICLE WINDOW SEALING STRIP GUIDE RAIL AND VEHICLE BODY SIDE TRIANGULAR WINDOW STRUCTURE**

(71) Applicant: Zhejiang Smart Intelligence Technology Co., Ltd., Ningbo, Zhejiang 315336 (CN)
(72) Inventor: ZHENG, Yiqi, Hangzhou Bay New District Ningbo, Zhejiang 315336 (CN); SHU, Pingping, Hangzhou Bay New District Ningbo, Zhejiang 315336 (CN); FU, Qiang, Hangzhou Bay New District Ningbo, Zhejiang 315336 (CN); MING, Ruidong, Hangzhou Bay New District Ningbo, Zhejiang 315336 (CN)
(74) Representative: Zaboliene, Reda
(86) International application number: PCT/CN2021/073986
(87) International publication number: WO 2022/160130

(57) **Abstract**

In order to increase production efficiency and reduce costs while reducing the width of a C pillar, the present invention provides a vehicle window sealing strip guide rail and a vehicle body side triangular window structure. The vehicle window sealing strip guide rail comprises: a first clamping groove, which is used for clamping a sealing strip and comprises a first clamping plate, a first connecting plate and a second clamping plate, the first clamping plate being arranged on a first side of the first connecting plate, the second clamping plate being arranged on a second side of the first connecting plate, the first clamping plate being bent towards a first direction, and the second clamping plate being bent towards a second direction, and the first direction being opposite the second direction; a second clamping groove, which is used to cooperate with an injection molding member to clamp the sealing strip, and which comprises a second connecting plate and a third connecting plate, the second connecting plate being arranged in the first direction, a first side of the second connecting plate being connected to the second clamping plate, a second side of the second connecting plate being connected to a first side of the third connecting plate, and an included angle being provided between the third connecting plate and the second connecting plate.

## Description

### TECHNICAL FIELD

The present invention relates to the field of vehicle structures, and in particular, to a vehicle window sealing strip guide rail and a vehicle body side trianglular window structure.

### BACKGROUND

In the prior art, side triangle windows of vehicle bodies are fixed with side wall sheet metal and sealed by circumferential sealant. It is necessary to go through a glue coating process on a final assembly line, production efficiency is low and cost is high, and it is difficult to disassemble and repair corner windows after assembly. The side wall sheet metal is equipped with C-pillar sheet metal and its inner side is equipped with a C-pillar interior panel, which makes a C-pillar width be very wide and thus greatly reduces an area of a visible region of a triangle window, the overall effect of a vehicle is affected.

Side wall sheet metal of most vehicle models in the current market has complete C-pillars, of which outer sides are covered by black edges of corner windows, inner sides are equipped with interior panels, and widths are generally over 100mm. In the vehicle models of which side wall sheet metal has complete C-pillars, the C-pillars are very wide, visible regions of triangular windows are reduced, and visual effect is affected.

In addition, some frameless vehicle models on the market use C-pillar free triangular windows; for example, Volkswagen Cc and Lamborghini URUS use aluminum alloy guide rails integrated with corner window glass, wherein cost is high, and use final assembly gluing process, wherein production efficiency is low. Although the currently used C-pillar free triangular window vehicle models have reduced widths of C-pillars, they all use the final assembly gluing assembly process, production efficiency is low; the currently adopted C-pillar free triangular window vehicle models all use aluminum alloy guide rails integrated with triangular window glass, cost is high; and vehicle body side triangle windows of current frameless vehicle models all adopts glass glue to fix sealing strips, detachablility and maintenance performance are poor.

Therefore, it is necessary to provide a scheme of mounting a sealing strip which increases production efficiency and reduces cost while reducing a width of a C-pillar.

### SUMMARY OF THE DISCLOSURE

In order to provide a scheme of mounting a sealing strip which increases production efficiency and reduces cost while reducing a width of a C-pillar, the present invention provides a vehicle window sealing strip guide rail and a vehicle body side triangular window structure. The present invention is specifically implemented by the following technical solutions.

The present invention provides a vehicle window sealing strip guide rail comprising: a first clamping trough, wherein the first clamping trough is configured to clamp a sealing strip and comprises a first clamping plate, a first connecting plate, and a second clamping plate, the first clamping plate is arranged at a first side of the first connecting plate, the second clamping plate is arranged at a second side of the first connecting plate, the first clamping plate is bent towards a first direction, the second clamping plate is bent towards a second direction, and the first direction is opposite the second direction; and a second clamping trough, wherein the second clamping trough is configured to cooperate with an injection molding member to clamp the sealing strip, and the second clamping trough comprises a second connecting plate and a third connecting plate, the second connecting plate is arranged along the first direction, a first side of the second connecting plate is connected to the second clamping plate, a second side of the second connecting plate is connected to a first side of the third connecting plate, and an included angle is provided between the third connecting plate and the second connecting plate.

Further improvement of the vehicle window sealing strip guide rail provided by the present invention is that: an angle range of the included angle is 90°~120°.

Further improvement of the vehicle window sealing strip guide rail provided by the present invention is that: the second connecting plate is provided with a protrusion configured to resist the sealing strip.

Further improvement of the vehicle window sealing strip guide rail provided by the present invention is that: a fourth connecting plate is further included; a first side of the fourth connecting plate is connected to a second side of the third connecting plate, a second side of the fourth connecting plate abuts against the second clamping plate, the second side of the second connecting plate abuts against the fourth connecting plate, and the fourth connecting plate is configured to be connected to the injection molding member.

Further improvement of the vehicle window sealing strip guide rail provided by the present invention is that: the second side of the third connecting plate is bent towards the first direction and connected to the first side of the fourth connecting plate, and the third connecting plate abuts against the fourth connecting plate; alternatively, the guide rail further comprises a U-shaped plate, two sides of the opening of the U-shaped plate are respectively provided with a first end portion and a second end portion, the second side of the third connecting plate is bent towards the second direction and connected to the first end portion, and the second side of the fourth connecting plate is bent towards the second direction and connected to the second end portion; the U-shaped plate is configured to be connected to the injection molding member.

Further improvement of the vehicle window sealing strip guide rail provided by the present invention is that: the second connecting plate is provided with a recess portion, the recess portion abuts against the fourth connecting plate, and the recess portion is located between the first side and the protrusion of the second connecting plate.

Further improvement of the vehicle window sealing strip guide rail provided by the present invention is that: the guide rail is a roller forming guide rail.

Further improvement of the vehicle window sealing strip guide rail provided by the present invention is that: a first end of the first connecting plate is provided with a circular hole, a second end of the first connecting plate is provided with a strip hole, a length direction of the strip hole is the same as a length direction of the first connecting plate.

Furthermore, the present invention further provides a vehicle body side triangular window structure comprising an injection molding member, a sealing strip, C-pillar triangular window glass, and a window sealing strip guide rail as described above, wherein the injection molding member is respectively connected to the guide rail and the C-pillar triangular window glass, and the sealing strip is clamped in the guide rail.

Further improvement of the vehicle body side triangular window structure provided by the present invention is that: the C-pillar triangular window glass is provided with a first side, a second side, a third side, and an included angle portion; the included angle portion is arranged between the second side of the C-pillar triangular window glass and the third side of the C-pillar triangular window glass; the guide rail is located at the first side of the C-pillar triangular window glass; the vehicle body side triangular window structure further comprises connecting members, a plurality of connecting members are respectively located at the second side of the C-pillar triangular window glass, the third side of the C-pillar triangular window glass, and the included angle portion; the connecting member comprises a base and a screw bolt, the base is connected to the injection molding member, the screw bolt is arranged on the base, and the screw bolt is configured to be connected to vehicle body sheet metal.

The vehicle window sealing strip guide rail provided by the present invention is configured to clamp a sealing strip, and the guide rail can be mounted at a position corresponding to a C-pillar in C-pillar free vehicle body sheet metal. Since there is no sheet metal at the position corresponding to a C-pillar in the C-pillar free vehicle body sheet metal, the present invention provides a mounting point for the sealing strip by the guide rail, so that the sealing strip can be mounted to the position corresponding to a C-pillar in the C-pillar free vehicle body sheet metal, and it is not necessary to make the sealing strip be connected to the sheet metal. After using the guide rail of the present invention, a visible C-pillar width is less than or equal to 50mm, the width is small, and the visual effect is good.

### BRIEF DESCRIPTION OF THE DRAWINGS

In order to explain technical solutions of embodiments of the present invention or in the prior art more clearly, drawings required to be used in description of the embodiments or of the prior art will be briefly introduced below. It is obvious that the drawings in the following description are only some embodiments of the present invention. For those skilled in the art, other drawings can be further obtained according to these drawings on the premise of paying no creative work.
FIG. 1 is a structural schematic view of vehicle body sheet metal with a C-pillar in the prior art.
FIG. 2 is a structural schematic view of vehicle body sheet metal without a C-pillar in the prior art.
FIG. 3 is a schematic view of a connecting structure among a sealing strip, vehicle window glass, an injection molding member, and sheet metal in the prior art.
FIG. 4 is a structural schematic view of a vehicle window sealing strip guide rail provided by an embodiment 1.
FIG. 5 is a cross-sectional structural schematic view of the vehicle window sealing strip guide rail provided by the embodiment 1.
FIG. 6 is another cross-sectional structural schematic view of the vehicle window sealing strip guide rail provided by the embodiment 1.
FIG. 7 is a structural schematic view of a sealing strip.
FIG. 8 is a schematic view of a connecting structure among a sealing strip, a guide rail, vehicle window glass, and an injection molding member.
FIG. 9 is a schematic front view of a vehicle body side triangular window structure provided by an embodiment 2.
FIG. 10 is a cross-sectional schematic view along A-A in FIG. 9.
FIG. 11 is a schematic rear view of the vehicle body side triangular window structure provided by the embodiment 2.
FIG. 12 is a structural schematic view of a connecting member of the embodiment 2.
FIG. 13 is an effect view of a visible region of a vehicle using vehicle body sheet metal with a C-pillar structure.
FIG. 14 is an effect view of a visible region of a vehicle using vehicle body sheet metal without a C-pillar structure.

### DETAILED DESCRIPTION

The technical solutions in the embodiments of the present invention will be described clearly and completely below in combination with the drawings in the embodiments of the present invention. Obviously, the described embodiments are merely some embodiments of the present invention, rather than all embodiments. Based on the embodiments of the present invention, any other embodiment obtained by one of ordinary skill in the art on the premise of paying no creative work belongs to the protection scope of the present invention.

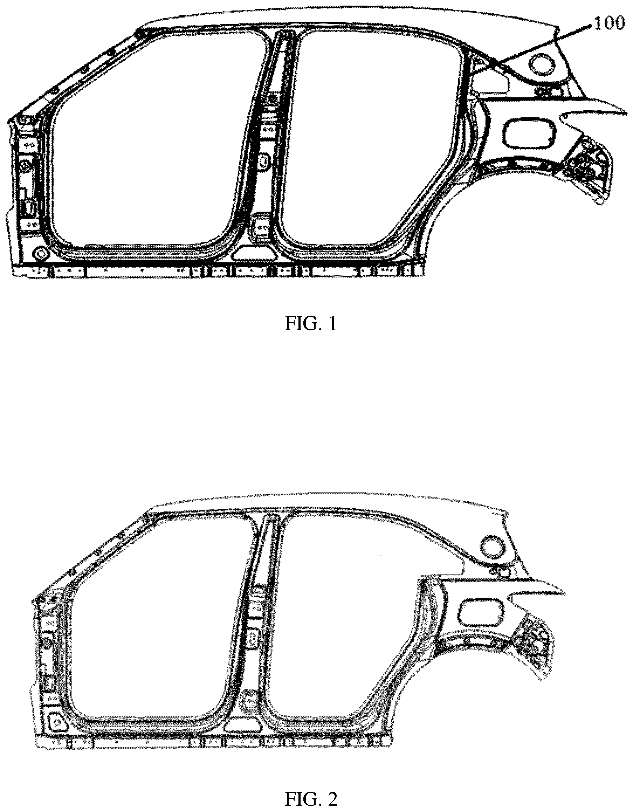

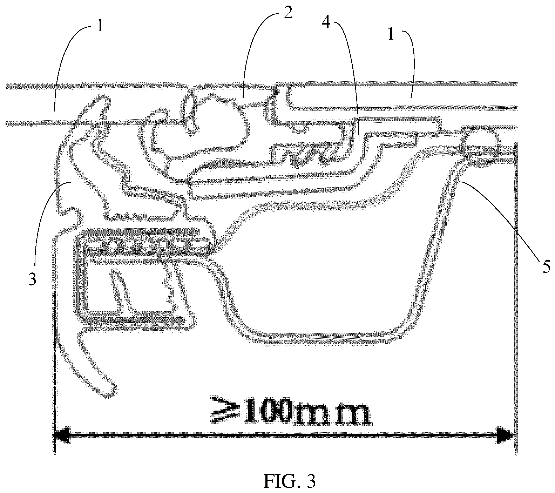

In the prior art, vehicle body sheet metal 5 with a C-pillar structure 100 is as shown in FIG. 1, and vehicle body sheet metal without a C-pillar is as shown in FIG. 2. A sealing structure in the prior art is as shown in FIG. 3 and applied to vehicle body sheet metal with a C-pillar; wherein a sealing strip includes a first part 2 and a second part 3, the first part 2 is not connected with the second part 3; the first part 2 abuts agains glass 1, and the first part 2 is further connected to an injection molding member 4; the second part 3 also abuts agains the glass 1, and the second part 3 is further snap-fitted with sheet metal 5. Based on FIG. 3, it can be known that the sealing structure in the prior art results in that a visible width of a C-pillar is greater than or equal to 100mm, the width is wide, and visual effect is poor.

In order to provide a scheme of mounting a sealing strip which increases production efficiency and reduces cost while reducing a width of a C-pillar, the present invention provides a vehicle window sealing strip guide rail and a vehicle body side triangular window structure. The present invention is specifically implemented by the following technical solutions.

### Embodiment 1

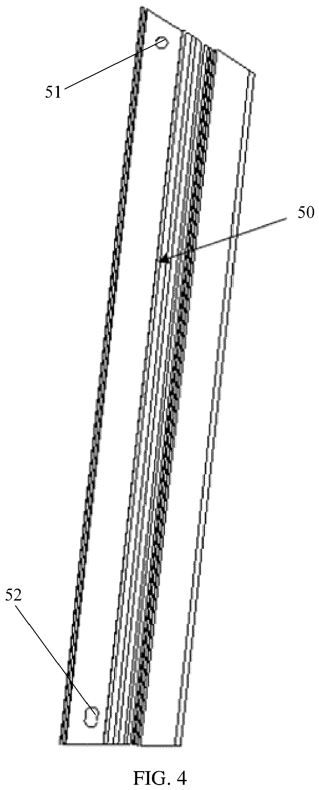

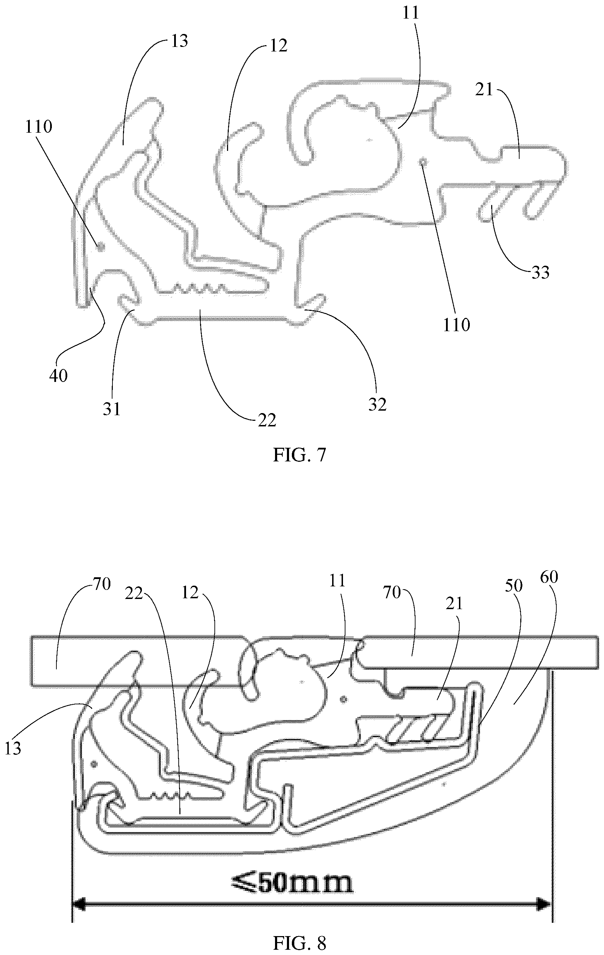

In combination with the shown in FIG. 4 to FIG.9, FIG. 13, and FIG. 14, a vehicle window sealing strip guide rail in the embodiment 1 includes: a first clamping trough, wherein the first clamping trough is configured to clamp a sealing strip and comprises a first clamping plate 511, a first connecting plate 521, and a second clamping plate 512, the first clamping plate 511 is arranged at a first side of the first connecting plate 521, the second clamping plate 512 is arranged at a second side of the first connecting plate 521, the first clamping plate 511 is bent towards a first direction, the second clamping plate 512 is bent towards a second direction, and the first direction is opposite the second direction; and a second clamping trough, wherein the second clamping trough is configured to cooperate with an injection molding member 60 to clamp the sealing strip, and the second clamping trough comprises a second connecting plate 522 and a third connecting plate 523, the second connecting plate 522 is arranged along the first direction, a first side of the second connecting plate 522 is connected to the second clamping plate 512, a second side of the second connecting plate 522 is connected to a first side of the third connecting plate 523, and an included angle A is provided between the third connecting plate 523 and the second connecting plate 522.

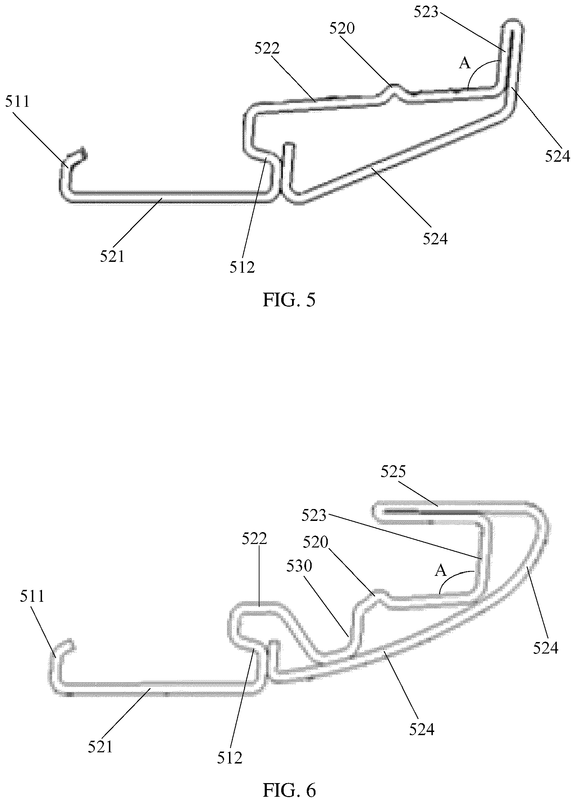

The vehicle window sealing strip guide rail in the embodiment 1 is configured to clamp a sealing strip, and a guide rail 50 can be mounted at a position corresponding to a C-pillar in C-pillar free vehicle body sheet metal. Since there is no sheet metal at the position corresponding to a C-pillar in the C-pillar free vehicle body sheet metal, the embodiment 1 provides a mounting point for the sealing strip by the guide rail 50, so that the sealing strip can be mounted to the position corresponding to a C-pillar in the C-pillar free vehicle body sheet metal, and it is not necessary to make the sealing strip be connected to the sheet metal. Based on FIG. 6, it can be known that after using the guide rail 50 in the embodiment 1, a visible C-pillar width is less than or equal to 50mm, the width is small, and the visual effect is good.

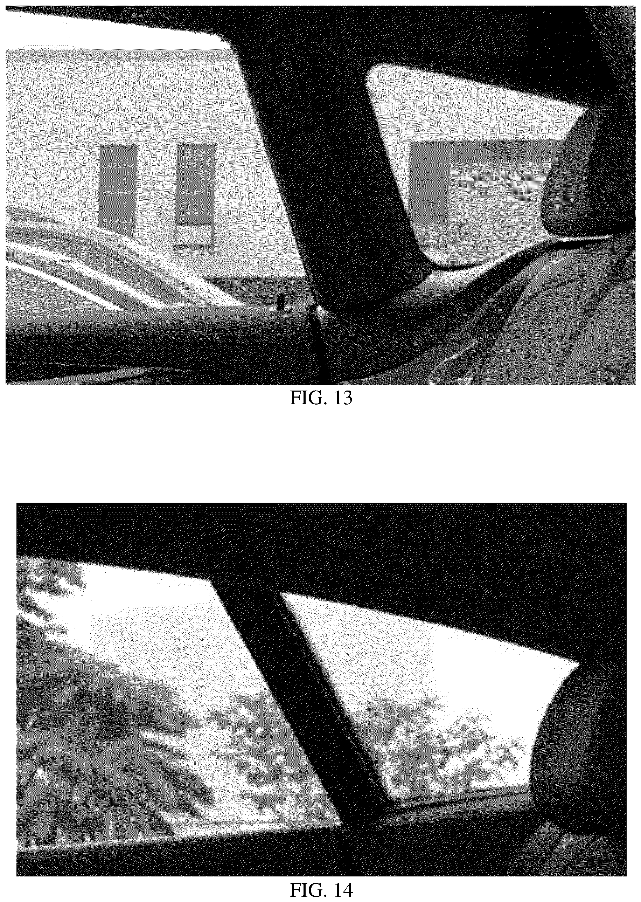

In the prior art, an effect view of a visible region of a vehicle using vehicle body sheet metal with a C-pillar structure is as shown in FIG. 13. When applying the embodiment 1 in vehicle body sheet metal without a C-pillar structure, an effect view of a visible region of a vehicle at a position corresponding to a C-pillar is as shown in FIG. 14. Based on comparison between FIG. 13 and FIG. 14, it can be known that after using the embodiment 1, an area of a visible region can be obviously increased, and visual effect of the visible region is optimized.

The embodiment 1 achieves not only effect of reducing a width of a C-pillar and increasing a visible region of a triangular window, but also effect of simplifying a final assembly process and reducing cost.

The sealing strip can include a first stop portion 11, a second stop portion 12, a third stop portion 13, a first clamping portion 11, and a second clamping portion 22; the first stop portion 11, the second stop portion 12, and the third stop portion 13 are all configured to abut against vehicle window glass; the first stop portion 11 is connected to the second stop portion 12, the first clamping portion 21 is connected to the first stop portion 11, and the first clamping portion 21 is configured to be connected to the injection molding member 60 and the guide rail 50; the second clamping portion 22 is respectively connected to the second stop portion 12 and the third stop portion 13, the second clamping portion 22 is configured to be snap-fitted with the guide rail 50, and the first stop portion 11 is further configured to abut against the guide rail 50.

Furthermore, a first side of the second clamping portion 22 is provided with a first bump 31, a second side of the second clamping portion 22 is provided with a second bump 32, the first side of the second clamping portion 22 and the second side of the second clamping portion 22 are arranged oppositely, and the first bump 31 and the second bump 32 are respectively configured to be snap-fitted with the guide rail 50. In the embodiment 1, the second clamping portion 22 is snap-fitted with the guide rail 50 through the first bump 31 and the second bump 32.

Furthermore, the first side of the second clamping portion 22 is further provided with a recess groove 40, the recess groove 40 is configured to receive an end of the guide rail 50. In the embodiment 1, the first bump 31 is snap-fitted with the end of the guide rail 50. After the first bump 31 is snap-fitted with the end of the guide rail 50, the end of the guide rail 50 can be received in the recess groove 40, thereby avoiding position interference between the sealing strip and the guide rail 50.

Furthermore, the included angle A between the third connecting plate 523 and the second connecting plate 522 has an angle range of 90°~120°. In the embodiment 1, the angle range of the included angle A is adapted to the first clamping portion 21 of the sealing strip, 90°<the included angle≤120°.

Furthermore, the second connecting plate 522 is provided with a protrusion 520 configured to stop the sealing strip. Furthermore, the first clamping portion 21 of the sealing strip is provided with a third bump 33, the third bump 33 is configured to be snap-fitted with the guide rail 50. In the embodiment 1, the first clamping portion 21 is snap-fitted with the protrusion 520 through the third bump 33, so as to further clamp the first clamping portion 21 to the guide rail 50.

In the embodiment 1, a hardness of the second stop portion 12, a hardness of the third stop portion 13, and a hardness of the third bump 33 are all less than a hardness of the first clamping portion 21 and a hardness of the second clamping portion 22. The second stop portion 12, the third stop portion 13, and the third bump 33 are made of soft glue, and the first clamping portion 21 and the second clamping portion 22 are made of hard glue. In the embodiment 1, both the first stop portion 11 and the third stop portion 13 are provided with anti-shrinkage fiberglass 110.

Furthermore, the guide rail 50 further includes a fourth connecting plate 524, a first side of the fourth connecting plate 524 is connected to a second side of the third connecting plate 523, a second side of the fourth connecting plate 524 abuts against the second clamping plate 512, the second side of the second connecting plate 522 abuts against the fourth connecting plate 524, and the fourth connecting plate 524 is connected to the injection molding member 60.

In the embodiment 1, the guide rail 50 is connected to the injection molding member 60 through the fourth connecting plate 524. Preferably, the first clamping trough is also connected to the injection molding member 60 to further achieve firm connection between the guide rail 50 and the injection molding member 60.

Furthermore, the second side of the third connecting plate 523 is bent towards the first direction and connected to the first side of the fourth connecting plate 524, and the third connecting plate 523 abuts against the fourth connecting plate 524; alternatively, the guide rail 50 further includes a U-shaped plate 525, two sides of the opening of the U-shaped plate 525 are respectively provided with a first end portion and a second end portion, the second side of the third connecting plate 523 is bent towards the second direction and connected to the first end portion, and the second side of the fourth connecting plate 524 is bent towards the second direction and connected to the second end portion; the U-shaped plate 525 is configured to be connected to the injection molding member 60.

In the embodiment 1, the U-shaped plate 525 can be added between the third connecting plate 523 and the fourth connecting plate 524, the U-shaped plate 525 can be connected to the injection molding member 60, so as to increase a connection area between the guide rail 50 and the injection molding member 60 and improve connection firmness. In the embodiment 1, being bent towards the first direction is being bent to the right side in the drawings, and being bent towards the second direction is being bent to the left side in the drawings.

Furthermore, the second connecting plate 522 is provided with a recess portion 530, the recess portion 530 abuts against the fourth connecting plate 524, and the recess portion 530 is located between the first side of the second connecting plate 522 and the protrusion 520.

In the embodiment 1, the arrangement of the recess portion 530 can reduce hollow cavity between the second connecting plate 522 and the fourth connecting plate 524, improve a structural strength of the guide rail 50, and make the guide rail 50 be less susceptible to damage.

Furthermore, the guide rail 50 is a roller forming guide rail 50. Compared with commonly used aluminum alloy guide rails 50, the guide rail 50 in the embodiment 1 is a roller forming guide rail 50, and can effectively lower cost and improve strength.

Furthermore, a first end of the first connecting plate 521 is provided with a circular hole 51, and a second end of the first connecting plate 521 is provided with a strip hole 52; a length direction of the strip hole 52 is the same as a length direction of the first connecting plate 521.

In the embodiment 1, the guide rail 50 is mounted to vehicle body sheet metal through the circular hole 51 and the strip hole. It is possible to first position and mount the guide rail 50 to the vehicle body sheet metal by a position screw bolt and the circular hole 51, and further fix the guide rail 50 the vehicle body sheet metal by the strip hole and another position screw bolt.

The present invention adopts a scheme removing C-pillar sheet metal and interior panel and integrating a metal guide rail 50 on a vehicle body side triangular window, thereby solving the problem in the prior art that a C-pillar width is wide and a visible region of a triangular window is small.

### Embodiment 2

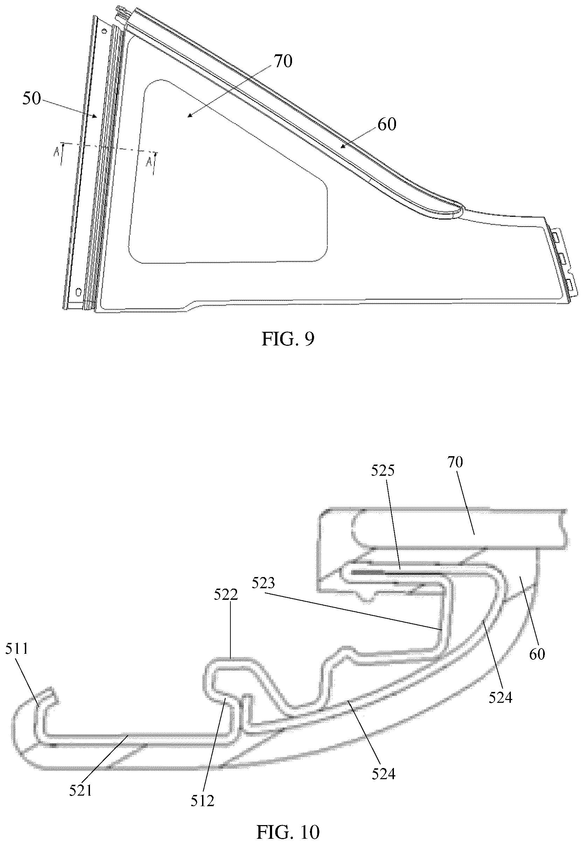

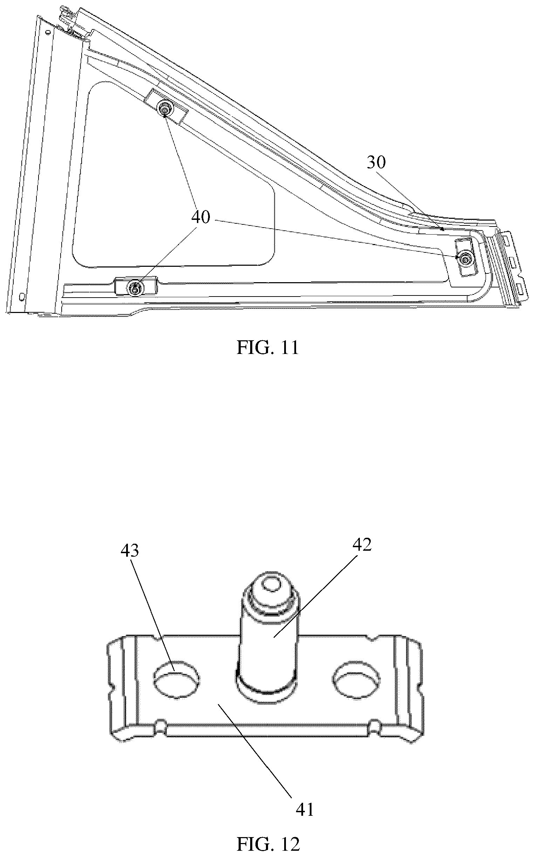

In combination with the shown in FIG. 10 to FIG. 12, the embodiment 2 provides a vehicle body side triangular window structure, which includes an injection molding member 60, a sealing strip, C-pillar triangular window glass 70, and a window sealing strip guide rail of the embodiment 1, wherein the injection molding member 60 is respectively connected to the guide rail 50 and the C-pillar triangular window glass 70, and the sealing strip is clamped in the guide rail 50.

The embodiment 2 is applied to vehicle body sheet metal without a C-pillar. The guide rail 50 is connected to the C-pillar triangular window glass 70 through the injection molding member 60, and the sealing strip only needs to be mounted to the guide rail 50, it is conducive to mount the sealing strip, and the sealing strip at a C-pillar position needs not to be connected to sheet metal, so that a visible C-pillar width reduces to be less than or equal to 50mm, the width is small, and the visual effect is good.

The embodiment 1 achieves not only effect of reducing a width of a C-pillar and increasing a visible region of a triangular window, but also effect of simplifying a final assembly process and reducing cost. Cost of a vehicle body side triangular window without a C-pillar is reduced, and detachability and maintenance performance of the triangular window are improved.

Furthermore, the C-pillar triangular window glass 70 is provided with a first side, a second side, a third side, and an included angle A portion; the included angle A portion is arranged between the second side of the C-pillar triangular window glass 70 and the third side of the C-pillar triangular window glass 70; the guide rail 50 is located at the first side of the C-pillar triangular window glass 70; the vehicle body side triangular window structure further comprises connecting members 40, a plurality of connecting members 40 are respectively located at the second side of the C-pillar triangular window glass 70, the third side of the C-pillar triangular window glass 70, and the included angle A portion; the connecting member 40 comprises a base 41 and a screw bolt 42, the base 41 is connected to the injection molding member 60, the screw bolt 42 is arranged on the base 41, and the screw bolt 42 is configured to be connected to vehicle body sheet metal. Adopting the screw bolt 42 to mount can improve mounting accuracy and firmness. The injection molding member 60 is connected with the base 41 and the injection molding member 60 passes through a through hole 43 of the base 41, thereby achieving firmness connection between the injection molding member 60 and the connecting member 40.

The screw bolt 42 of the triangular window assembly is mounted to a mounting positioning hole of side wall sheet metal, thereby effectively improving mounting accuracy and firmness.

Furthermore, the triangular window comes with butyl glue 30, the butyl glue 30 is arranged on the injection molding member 60. The butyl glue 30 is sealing glue and comes with the triangular window. Therefore, in the embodiment 2, there is no need to apply glue on a final assembly line, production efficiency of final assembly glue coating installation is improved, and final assembly cost is lowered, assembly is convenient and quick.

The vehicle body side triangular window structure of the present invention adds three modules: the C-pillar roller forming guide rail 50, the butyl glue 30, and the connecting member 40. Among them, the C-pillar guide rail 50 replaces side wall C-pillar sheet metal and interior panels, a visible C-pillar width reduces from 100mm to less than 50mm, an area of a visible region of triangular window glass is increased. The butyl glue 30 is sealing glue and comes with the triangular window, the final assembly line needs not coat glue and can be directly assembled, thereby improving final assembly production efficiency. The connecting member 40 is a fastening device for the triangular window, and effectively improves accuracy and firmness of assembly of the triangular window. Adopting sticker for sealing and the screw bolt 42 for fixing effectively improves detachability and maintenance performance.

The present invention provides a vehicle body side triangular window having no C-pillar and coming with glue, which reduces a width of a C-pillar, increases an area of a visible region, and improve effect of the whole vehicle. Adopting its own butyl glue 30 simplifies a final assembly process and improves final assembly efficiency. Assembly using the integrated screw bolt 42 also increase accuracy and stability of mounting the triangular window. The present invention has various excellent performances, which include advantages such as improving perception of the whole vehicle, simple assembly, low cost, good C-pillar strength, easy platformization, and so on, and has sufficient adaptability conditions for platform strategies with obvious trend.

The above are only preferred embodiments of the present invention, and are not intended to limit the present invention. Any modification, equivalent replacement, and improvement made within the spirit and principles of the present invention should be included in the protection scope of the present invention.

## Claims

1. A vehicle window sealing strip guide rail comprising: a first clamping trough, wherein the first clamping trough is configured to clamp a sealing strip and comprises a first clamping plate (511), a first connecting plate (521), and a second clamping plate (512), the first clamping plate (511) is arranged at a first side of the first connecting plate (521), the second clamping plate (512) is arranged at a second side of the first connecting plate (521), the first clamping plate (511) is bent towards a first direction, the second clamping plate (512) is bent towards a second direction, and the first direction is opposite the second direction; and a second clamping trough, wherein the second clamping trough is configured to cooperate with an injection molding member (60) to clamp the sealing strip, and the second clamping trough comprises a second connecting plate (522) and a third connecting plate (523), the second connecting plate (522) is arranged along the first direction, a first side of the second connecting plate (522) is connected to the second clamping plate (512), a second side of the second connecting plate (522) is connected to a first side of the third connecting plate (523), and an included angle (A) is provided between the third connecting plate (523) and the second connecting plate (522).

2. The vehicle window sealing strip guide rail according to claim 1, wherein an angle range of the included angle (A) is 90°~120°.

3. The vehicle window sealing strip guide rail according to claim 1, wherein the second connecting plate (522) is provided with a protrusion (520) configured to resist the sealing strip.

4. The vehicle window sealing strip guide rail according to claim 3, further comprising a fourth connecting plate (524); wherein a first side of the fourth connecting plate (524) is connected to a second side of the third connecting plate (523), a second side of the fourth connecting plate (524) abuts against the second clamping plate (512), the second side of the second connecting plate (522) abuts against the fourth connecting plate (524), and the fourth connecting plate (524) is configured to be connected to the injection molding member (60).

5. The vehicle window sealing strip guide rail according to claim 4, wherein the second side of the third connecting plate (523) is bent towards the first direction and connected to the first side of the fourth connecting plate (524), and the third connecting plate (523) abuts against the fourth connecting plate (524); alternatively, the guide rail further comprises a U-shaped plate (525), two sides of the opening of the U-shaped plate (525) are respectively provided with a first end portion and a second end portion, the second side of the third connecting plate (523) is bent towards the second direction and connected to the first end portion, and the second side of the fourth connecting plate (524) is bent towards the second direction and connected to the second end portion; the U-shaped plate (525) is configured to be connected to the injection molding member (60).

6. The vehicle window sealing strip guide rail according to claim 5, wherein the second connecting plate (522) is provided with a recess portion (530), the recess portion (530) abuts against the fourth connecting plate (524), and the recess portion (530) is located between the first side and the protrusion (520) of the second connecting plate (522).

7. The vehicle window sealing strip guide rail according to claim 1, wherein the guide rail is a roller forming guide rail.

8. The vehicle window sealing strip guide rail according to claim 1, wherein a first end of the first connecting plate (521) is provided with a circular hole (51), a second end of the first connecting plate (521) is provided with a strip hole (52), a length direction of the strip hole (52) is the same as a length direction of the first connecting plate (521).

9. A vehicle body side triangular window structure comprising an injection molding member (60), a sealing strip, C-pillar triangular window glass (70), and a window sealing strip guide rail (50) according to any one of claims 1-8, wherein the injection molding member (60) is respectively connected to the guide rail (50) and the C-pillar triangular window glass (70), and the sealing strip is clamped in the guide rail (50).

10. The vehicle body side triangular window structure according to claim 9, wherein the C-pillar triangular window glass (70) is provided with a first side, a second side, a third side, and an included angle portion; the included angle portion is arranged between the second side of the C-pillar triangular window glass (70) and the third side of the C-pillar triangular window glass (70); the guide rail (50) is located at the first side of the C-pillar triangular window glass (70); the vehicle body side triangular window structure further comprises connecting members (40), a plurality of connecting members (40) are respectively located at the second side of the C-pillar triangular window glass (70), the third side of the C-pillar triangular window glass (70), and the included angle portion; the connecting member (40) comprises a base (41) and a screw bolt (42), the base (41) is connected to the injection molding member (60), the screw bolt (42) is arranged on the base (41), and the screw bolt (42) is configured to be connected to vehicle body sheet metal.
